# EUROPEAN PATENT SPECIFICATION

(11) **EP 1 350 738 B1**
(45) Date of publication and mention of the grant of the patent: **24.05.2006**
(21) Application number: 02257975.9
(22) Date of filing: 19.11.2002
(51) Int. Cl.: B65D 81/20, B65D 79/00, B65D 25/16

(54) **Container having collapsible liner**
Behälter mit kollabierbarem Beutel
Récipient contenant une poche collabale

(30) Priority: 21.03.2002 US 103262
(43) Date of publication of application: 08.10.2003
(73) Proprietor: Sonoco Development, Inc., Hartsville, South Carolina 29550 (US)
(72) Inventor: Williams, Alan D., Camden, South Carolina 29020 (US); Sins, Veronique, 1850 Grimbergen (BE); Case, Drew, Hartsville, South Carolina 29550 (US)
(74) Representative: MacDougall, Donald Carmichael

(56) References cited:
- EP-A- 1 151 936
- US-A- 3 712 534
- US-A- 4 282 984
- BRODY A.L.; MARSH K.S.: 'The Wiley Encyclopadia of Packaging Technology - 2nd edition', 1997, JOHN WILEY AND SONS, INC., NEW YORK

## Description

### FIELD OF THE INVENTION

The present invention relates to containers for packaging products and, more particularly, composite containers for vacuum packaging of products having a liner for automatically constricting and moving away from a container body portion when a vacuum is applied, and then contracting and moving back toward the body portion when the vacuum is released.

### BACKGROUND OF THE INVENTION

Composite containers have been utilized in lieu of metal, plastic or glass containers in many instances for packaging of various products, including food products, due to their cost efficiencies, etc. A typical composite container includes a generally tubular body portion made from paperboard, a liner ply attached to the inner surface of the body portion made from a paper-backed foil that is generally impervious to liquid transmission, a label ply attached to the outer surface of the body portion, and a pair of end closures. In some cases, these containers are packaged with an internal vacuum, but problems can arise when the body portion of the composite container lacks adequate strength to maintain its shape after a vacuum is created inside the container, which can cause the container to collapse inwardly.

In an effort to overcome this problem, a loose liner system has been utilized in some composite containers, as disclosed in U.S. Patent 4,158,425, assigned to the assignee of the present invention. As may be seen in this U.S. patent, the relatively slack liner of the composite container is secured solely at the opposite ends thereof. As a result, the liner is pulled inwardly toward the product when a vacuum is created inside the container. This provides a solution to the problem of a collapsing body portion, as the wall of the body portion has no inwardly directed forces at an intermediate portion thereof. In addition, the body portion may be relatively porous so as to allow the pressure differential across it to equalize over time, particularly if a vent hole is utilized.

However, this composite container with a loose liner system produces additional problems. When the container is opened and the vacuum is released, the liner stays pulled against the product. This causes the volume available for the product within the container to remain reduced and does not allow the product to settle back into the container. As a result, the product tends to create a bottleneck near the opening of the container so that it is difficult to remove without spillage. The product can also be pressed against the liner and the end closures when under vacuum and therefore can be broken or damaged during the vacuum packaging process. This is particularly disadvantageous when packaging fragile products, such as potato crisps or cookies, as broken products are wasteful and aesthetically displeasing to the consumer. Also, the liner inside of the container looks baggy or loose when the product is removed, providing a bad impression to the consumer.

To address such problems, composite containers have been developed having a retractable liner as disclosed in U.S. Patent No. 5,988,493, which is also assigned to the assignee of the present invention. The '493 patent is directed to a composite container having a body portion and a liner that are separated by an elastic material that adheres to the liner and to the inner surface of the body portion. The elastic material, which can be applied in a pattern or as a solid coat, is capable of stretching as a vacuum is applied to products contained within the liner such that the liner constricts about the products for support and protection against breakage and the like. When the vacuum is released, the elastic material retracts, which helps pull the liner away from the products. However, the elastic material disposed between the body portion and the liner occupies space, which effectively reduces the volume available for the products. In addition, the elastic material can be relatively slow to retract when the vacuum is removed from the products, which can make removing the products difficult. Further, the elastic material adds cost and complexity to the manufacturing process. Thus, while the container of the '493 patent provides significant advances in the state of the art, further advances are desirable.

The document EP-A-1 151 936 discloses a further container for vacuum packaging products. The container known from this document comprises a tubular liner of resiliently stretchable, flexible polymeric material, said liner moves inwardly towards the products when vacuum is applied and moves outwardly towards the body portion when the vacuum is released.

### SUMMARY OF THE INVENTION

It is the object of this invention to provide a container for vacuum packaging of products which utilizes a liner that can constrict inwardly from the body portion of the container when a vacuum is created in the container, yet retract automatically when the vacuum is removed. As such, additional elastic material is not required, and the liner of the present invention retracts significantly faster than the liner disclosed in the '493 patent or in conventional liners.

In particular, a container for vacuum packaging a product according to one embodiment of the present invention includes a generally tubular body portion, such as a paperboard tube or the like, having opposite ends and an inner surface. Preferably, the body portion of the container is formed by spirally winding paperboard strips to form a generally cylindrical shape. End closures are preferably positioned on open ends of the body portion for hermetically closing the container.

A generally tubular liner is also provided. The liner is formed of a resiliently stretchable, flexible material that is substantially impervious to fluids. The liner is disposed within the body portion and has opposite ends that are attached to the body portion, such as with a dextrine adhesive, and an unattached medial portion that can constrict and move away from the body portion when a vacuum is applied. Advantageously, the liner has a memory such that the medial portion of the liner retracts to an initial position when the vacuum is released. The liner comprises an oriented polymeric film, and more particularly a metallized, oriented polymeric film. Examples of such materials are metallized oriented polyethylene terepthalate, metallized oriented polypropylene, metallized biaxially oriented nylon, and equivalents thereof. The liner is formed of a material having a modulus of elasticity between about 3102,64 MPa (450,000 psi) and about 4481,59 MPa (650,000 psi) and an ultimate elongation of between about 75% and about 200%. As such, the liner retracts relatively quickly when the container is opened and the vacuum is released, which allows the products to be easily removed from the container.

The liner of the present invention has a first position adjacent the body portion of the container. When a vacuum is applied to the container, the unattached medial portion of the liner is free to move inwardly toward the products to a second position so as to secure and protect the products. A vent hole is defined in the body portion so that the pressure between the body portion and liner is equalized with ambient pressure. When the container is opened and the vacuum is released, the memory in the liner causes the liner to retract to the first position adjacent the body portion. In one embodiment, a plurality of fragile products are arranged between the opposite ends of the body portion of the container. Due to the advantages of the present invention, the liner of the present invention can move between the first and second positions without breaking or damaging the fragile products proximate the opposite ends of the body portion, yet retract quickly so that the products can be removed.

### BRIEF DESCRIPTION OF THE DRAWINGS

Having thus described the invention in general terms, reference will now be made to the accompanying drawings, which are not necessarily drawn to scale, and wherein:
Figure 1 is a perspective view of a container according to one embodiment of the present invention with a portion broken away for clarification purposes;
Figure 2 is cross-sectional view of the container shown in Figure 1 illustrating the container liner constricted about the products placed therein while a vacuum is applied;
Figure 3 is a close-up cross-sectional view of a portion of the container as indicated in Figure 2; and
Figure 4 is cross-sectional view of a container according to one embodiment of the present invention illustrating the container liner moved back into a position adjacent the body portion after the vacuum is removed.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

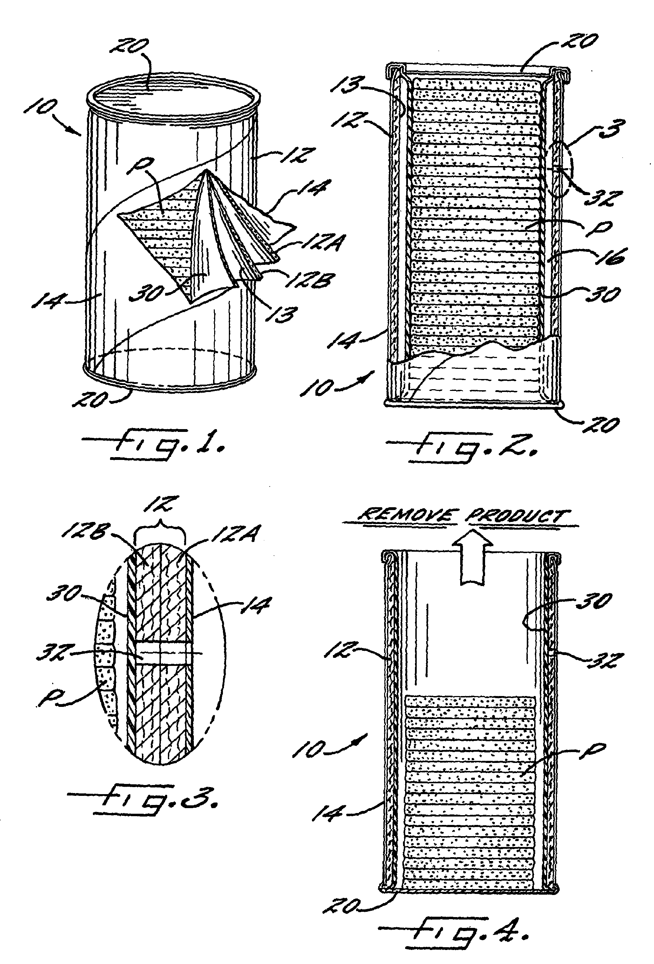

Referring to Figures 1-4, a composite container generally indicated at **10** and constructed in accordance with this invention for vacuum packaging of products **P** is illustrated. The container **10** comprises a generally tubular body portion **12** defining a desired shape for the container **10** and having an inner surface **13**. The body portion **12** of the container **10** is preferably formed by spirally winding paperboard strips to define a generally cylindrical shape for the container. The body portion **12** serves to resist radial and axial crushing of the container, including when the container **10** is subjected to a vacuum. An outside label layer **14** may be utilized and preferably is spirally wound on an outer surface of the body portion **12** in a manner well understood by those with ordinary skill in the art.

The body portion **12** may be formed by spirally winding one or more plies of paperboard or board stock to form a tube whose wall has a radial thickness of between about 0,254 cm (0.100) and about 0,889 cm (0.35 inch), preferably between about 0,267 cm (0.105) and about 0,702 cm (0.30 inch), for example, about 0,533 cm (0.21 inch). Board stock conventionally used in the manufacture of spirally wound composite containers is commercially available from various manufacturers including Sonoco Products Company, Republic Paperboard Corporation and Middletown Board Corporation. In order to function advantageously as the spirally wound paperboard hollow body portion, the board stock typically is composed of kraft or recycled paper and can typically range from about 22,7 (50) to about 45,4 kg/ream (100 lbs./ream). In some instances, the wall of the body portion **12** can include a weak exterior layer (not shown), e.g. a 0,0076 cm (0.003 inch) exterior news. In the illustrated embodiment, the body portion **12** is comprised of two more paperboard layers **12A** and **12B** wound on top of the other and adhered together with a suitable adhesive. The label layer **14** is conventionally constructed from suitable materials, such as kraft paper, a polymer/foil laminate, a kraft paper/foil laminate, or the like. In addition, a vent **32**, which can be in the form of a hole, slit, or other shape, is formed through both the body portion **12** and the label layer **14** so that air outside the container **10** can enter through the vent **32** into a space **16** inside the body portion **12** when the vacuum is applied to the products **P**.

The container **10** also includes end closures **20** on each open end of the hollow body portion **12** for hermetically closing the hollow body portion **12.** The end closures **20** may be double-seamed with the open end portions of the hollow body portion **12** in a manner well understood by those with ordinary skill in the art. The bottom end closure **20** may typically be constructed of steel or aluminum plate with applied coatings and/or electrolytic tinplate. Top closure **20** may be of a steel or aluminum plate with applied coatings and/or electrolytic tinplate with a center panel of a flexible laminate made of films, foil, and/or extruded polymers, or it may be made totally of a flexible laminate made of films, foil, and/or extruded polymers heatsealed or adhesively attached to the container body.

A generally tubular liner **30** is positioned within the hollow body portion **12**. The liner **30** is formed of a resiliently stretchable, flexible material that is substantially impervious to fluids, as discussed below. The liner **30** has opposite ends corresponding to the opposite ends of the body portion **12** that are attached thereto with a suitable adhesive, such as a dextrine adhesive. Alternatively, other adhesives could be used, such as polyvinyl acetate, polyvinyl acetate copolymers, including but not limited to polyethylene vinyl acetate, or polyacrylics, including but not limited to acrylic copolymers. In one embodiment, the opposite ends of the liner **30** are attached to the body portion **12** with about a 1,27 cm (1/2") band of dextrine adhesive, which may be a solid strip or may be in a patterned configuration. The band of adhesive may be greater or less than 1,27 cm (1/2") depending on several factors including the length of the container, the amount of vacuum applied, the type of adhesive used, and the type of liner material used. By attaching the opposite ends of the liner **30** to the body portion **12,** the liner therefore includes an unconnected medial or interior portion between the opposite ends of the liner that defines part of the space **16** between the medial portion of the liner and the inner surface **13** of the body portion **12**. The medial portion of the liner **30** is free to be constricted inwardly away from the body portion when a vacuum is applied. Advantageously, the liner **30** has a memory such that the liner will contract and move back to an initial position adjacent the inner surface **13** of the body portion **12** if the container is opened and the vacuum is released.

Advantageously, the liner **30** is a resiliently stretchable, flexible barrier type material, such as an oriented polymeric film. The liner **30** preferably has a modulus of elasticity of between about 3102,64 MPa (450,0000 psi) and about 4489,59 MPa (650,00 psi) and more particularly about 4136,85 MPa (600,000 psi), and an ultimate elongation of between about 75% and about 200%, and more particularly about 100%. The liner **30** also is an oxygen or gas barrier so that the vacuum process is effective. In this regard, the liner **30** has a maximum gas transmission rate of about 1,55 cm³/m²/24h (0.10cc/100 in²/24 hours), and preferably has a maximum gas transmission rate of about 0,620 cm³/m²/24h (0.04cc/100 in²/24) hours. Suitable examples of such materials are metallized oriented polyethylene terepthalate (MOPET), which is available from E.I. du Pont de Nemours and Company; metallized oriented polypropylene (MOPP), which is available from Exxon Mobil Corporation; and metallized biaxially oriented nylon (MBON), which is available from Honeywell Corporation. The liner **30** can be a multi- layer polymer film structure having layers of different polymer materials laminated or co-extruded together. For example, the liner **30** can have the structure: natural kraft/low-density polyethylene (LDPE)/MOPET/high-density polyethylene (HDPE). The kraft layer goes against the inner surface **13** of the body portion **12** and facilitates adhering the liner to the body wall.

In accordance with this invention, the liner **30**, and more specifically the medial portion of the liner, is capable of moving between a first position, which preferably is adjacent the inner surface **13** of the body portion as shown in Figures 3 and 4, and a second position, which is preferably around or about a product or products **P** that are placed therein as shown in Figure 2. In particular, the medial portion of the liner **30** constricts and moves away from the body portion **12** when a vacuum, such as about 0,17-0,51 bar (5-15 in. Hg), and more particularly about 0,425 bar (12.5 in. Hg), is applied to the product positioned in the container **10** (as illustrated in Figure 2). The liner **30** is stretched by the vacuum. When the container is opened and the vacuum is released, the liner **30** moves back relatively quickly to the first position adjacent the inner surface **13** of the body portion **12** (as shown in Figure 4). And as described above, the vent **32** allows the pressure inside and outside the body portion **12** to equalize so that the body portion is not substantially deformed by the vacuum packaging process. Advantageously, the container of the present invention avoids the problems discussed above with respect to the previous loose liner systems in vacuum packaged composite containers of U.S. Patents 4,158,425 and 5,988,493.

The container of the present invention is particularly advantageous for packaging fragile products, such as a plurality of potato crisps or cookie biscuits, that can be easily damaged during the vacuum packaging process. In particular, the liner **30** is able to constrict enough to protect and support the fragile products inside the container including the products nearest the opposite ends of the container that are the first to be seen by the consumer when the container is opened, yet retracts quickly when the vacuum is removed such that the products can be easily removed. The degree to which the liner constricts radially inwardly depends on the amount of vacuum applied, the elastic modulus of the liner **30**, and other factors. Advantageously, the liner **30** is configured and the vacuum is applied such that the products are not broken by the liner **30** moving between the first position adjacent the body portion **12** and the second position about the products **P**, and the products are not difficult to retrieve when the vacuum is removed.

By this invention, a composite container **10** for vacuum packaging of products **P** is provided that includes a liner **30** arranged to constrict and move away from the body portion **12** when a vacuum is formed on the products **P** packaged in the container **10** and to automatically contract and move back to an initial position adjacent the body portion **12** of the container **10** when the container is opened and the vacuum on the products is removed. This construction overcomes the prior problems with composite containers for vacuum packaging of products, and provides secure protection for the products while not damaging the products during the vacuum process.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A container for vacuum packaging products, comprising:
a generally tubular body portion having opposite ends and an inner surface; and
a generally tubular liner of resiliently stretchable, flexible material that is substantially impervious to fluids, the liner being disposed inside the body portion and having opposite ends that are attached to the body portion and an unattached medial portion between the opposite ends, the liner being arranged to be stretched and constricted inwardly away from the body portion when a vacuum is applied such that the medial portion of the liner contracts and moves inwardly about a product placed inside the liner, and is **characterised in that**;
when the vacuum is released, the medial portion of the liner moves back outwardly to a position adjacent the body portion, and the liner comprises an oriented polymeric film selected from the group consisting of metallized oriented polyethylene terepthalate, metallized oriented polypropylene, and metallized biaxially oriented nylon, and the liner has a modulus of elasticity between about 3102,64 MPa (450,000 psi) and about 4481,59 MPa (650,000 psi)and an ultimate elongation of between about 75% and about 200%.

2. A container according to claim 1, wherein the liner has substantially no slack when the liner is in the position adjacent the body portion, and wherein the liner is stretched by the vacuum.

3. A container according to claim 1 or claim 2, wherein the liner comprises an oriented polymeric film having a memory.

4. A container according to any of the preceding claims, wherein the liner has a maximum gas transmission rate of about 1,55cm³/m²/24h (0.10 cc/100 in²/24 hours).

5. A container according to claims 1 to 3, wherein the liner has a maximum gas transmission rate of about 0,620 cm³/m²/24h (0.04 cc/100 in²/24 hours).

6. A container according to any of the preceding claims, further comprising a label affixed to an outer surface of the body portion.

7. A container according to any of the preceding claims, wherein the liner is attached to the body portion with a dextrine adhesive.

8. A container according to any of the preceding claims, further comprising an end closure on each of opposite ends of the body portion of the container closing said body portion and said liner; and at least one product disposed inside said liner and said body portion.

9. A container according to claim 8, wherein said at least one product comprises a plurality of fragile products arranged between the opposite ends of the body portion of the container, whereby the liner moves inwardly about the fragile products when the vacuum is applied without damaging or breaking the fragile products located proximate the opposite ends of the body portion.

## Patentansprüche

1. Behälter zum Vakuumverpacken von Produkten, mit:
einem allgemein rohrförmigen Körperabschnitt mit einander gegenüberliegenden Enden und einer Innenoberfläche; und
einer allgemein rohrförmigen Auskleidung aus elastisch dehnbarem flexiblem Material, das im Wesentlichen undurchlässig für Fluide ist, wobei die Auskleidung im Innern des Körperabschnitts angeordnet ist und gegenüberliegende Enden hat, die am Körperabschnitt befestigt sind, und einen nicht befestigten mittleren Abschnitt zwischen den gegenüberliegenden Enden hat und wobei die Auskleidung so angeordnet ist, dass sie gedehnt wird und sich nach innen vom Körperabschnitt weg zusammenzieht, wenn ein Unterdruck bzw. Vakuum angelegt wird, so dass der mittlere Abschnitt der Auskleidung sich zusammenzieht und nach innen um ein im Innern der Auskleidung platziertes Produkt legt,
**dadurch gekennzeichnet, dass**
dann, wenn das Vakuum aufgehoben wird, sich der mittlere Abschnitt der Auskleidung nach außen in eine Position, in der sie nahe dem Körperabschnitt ist, zurückbewegt und die Auskleidung einen gerichteten Polymerfilm aufweist, der aus der Gruppe gewählt ist, die aus metallisiertem gerichtetem Polyethylenterephthalat, metallisiertem gerichtetem Polypropylen und metallisiertem biaxial gerichtetem Nylon besteht, und die Auskleidung einen Elastizitätsmodul zwischen ca.,3102,64 MPa (450.000 psi) und ca. 4481,59 MPa (650.000 psi) und eine Bruchdehnung von zwischen ca. 75% und ca. 200% hat.

2. Behälter nach Anspruch 1, bei dem die Auskleidung im Wesentlichen nicht schlaff ist, wenn die Auskleidung sich in der Position nahe dem Körperabschnitt befindet, und bei dem die Auskleidung durch das Vakuum gedehnt wird.

3. Behälter nach Anspruch 1 oder 2, bei dem die Auskleidung einen gerichteten Polymerfilm mit Gedächtnis aufweist.

4. Behälter nach einem der vorigen Ansprüche, bei dem die Auskleidung eine maximale Gasdurchlässigkeitsrate von ca. 1,55 cm³/m²/24 h (0,10 cm³/100 in²/24 Stunden) hat.

5. Behälter nach Anspruch 1 bis 3, bei dem die Auskleidung eine maximale Gasdurchlässigkeitsrate von ca. 0,620 cm³/m²/24 h (0,04 cm³/100 in²/24 Stunden) hat.

6. Behälter nach einem der vorigen Ansprüche, ferner mit einem Etikett, das an einer Außenoberfläche des Körperabschnitts angebracht ist.

7. Behälter nach einem der vorigen Ansprüche, bei dem die Auskleidung mit einem Dextrinleim am Körperabschnitt befestigt ist.

8. Behälter nach einem der vorigen Ansprüche, ferner mit einem Endverschluss an jedem der gegenüberliegenden Enden des Körperabschnitts des Behälters, wobei die Endverschlüsse den Körperabschnitt und die Auskleidung verschliessen, und mit mindestens einem Produkt, das im Innern der Auskleidung und des Körperabschnitts platziert ist.

9. Behälter nach Anspruch 8, bei dem das mindestens eine Produkt eine Vielzahl zerbrechlicher Produkte aufweist, die zwischen den gegenüberliegenden Enden des Körperabschnitts des Behälters angeordnet sind, wobei sich die Auskleidung nach innen um die zerbrechlichen Produkte bewegt, wenn das Vakuum angelegt wird, ohne die zerbrechlichen Produkte nahe den gegenüberliegenden Enden des Körperabschnitts zu beschädigen oder zu zerbrechen.

## Revendications

1. Récipient pour emballer sous vide des produits, comprenant :
une partie formant corps, sensiblement tubulaire, présentant des extrémités opposées et une surface intérieure ; et
une poche sensiblement tubulaire, en matériau souple extensible qui est sensiblement imperméable aux fluides, la poche étant disposée à l'intérieur de la partie formant corps et présentant des extrémités opposées qui sont fixées à la partie formant corps et une partie intermédiaire non fixée située entre les extrémités opposées, la poche étant prévue de manière à être étirée et rétractée vers l'intérieur à distance de la partie formant corps lorsqu'un vide est appliqué de telle manière que la partie intermédiaire de la poche se contracte et se déplace vers l'intérieur autour d'un produit placé à l'intérieur de la poche, et est **caractérisée en ce que** :
lorsque le vide est purgé, la partie intermédiaire de la poche revient vers l'extérieur à une position adjacente à la partie formant corps, et la poche est constituée d'un film polymère orienté sélectionné parmi le groupe comprenant le polyéthylène téréphtalate orienté métallisé, le polypropylène orienté métallisé, et le nylon bi-orienté métallisé, et la poche présente un module d'élasticité compris entre environ 3.102,64 MPa (450.000 psi) et environ 4.481,59 MPa (650.000 psi) et un allongement à la rupture compris entre environ 75% et environ 200%.

2. Récipient selon la revendication 1, dans lequel la poche ne présente sensiblement aucun relâchement lorsque la poche est dans la position adjacente à la partie formant corps, et dans lequel la poche est étirée par le vide.

3. Récipient selon la revendication 1 ou la revendication 2, dans lequel la poche est constituée d'un film polymère orienté à mémoire de forme.

4. Récipient selon l'une quelconque des revendications précédentes, dans lequel la poche présente un taux de perméabilité aux gaz égal à environ 1,55 cm³/m²/24h (0,10 cm³/100 pouces carrés/24 heures).

5. Récipient selon les revendications 1 à 3, dans lequel la poche présente un taux de perméabilité aux gaz égal à environ 0,620 cm³/m²/24h (0,04 cm³/100 pouces carrés/24 heures).

6. Récipient selon l'une quelconque des revendications précédentes, comprenant en outre une étiquette fixée sur une surface extérieure de la partie formant corps.

7. Récipient selon l'une quelconque des revendications précédentes, dans lequel la poche est fixée à la partie formant corps à l'aide d'un adhésif à base de dextrine.

8. Récipient selon l'une quelconque des revendications précédentes, comprenant en outre une fermeture d'extrémité sur chacune des extrémités opposées de la partie formant corps du récipient, fermant ladite partie formant corps et ladite poche ; et au moins un produit disposé à l'intérieur de ladite poche et de ladite partie formant corps.

9. Récipient selon la revendication 8, dans lequel ledit ou chaque produit est composé d'une pluralité de produits fragiles disposés entre les extrémités opposées de la partie formant corps du récipient, de telle manière que la poche se déplace vers l'intérieur autour des produits fragiles lorsque le vide est appliqué, sans endommager ou rompre les produits fragiles situés à proximité des extrémités opposées de la partie formant corps.
